# EUROPEAN PATENT APPLICATION

(11) **EP 1 849 712 A1**
(43) Date of publication of application: **31.10.2007**
(21) Application number: 07006549.5
(22) Date of filing: 29.03.2007
(51) Int. Cl.: B65D 65/46, D21H 11/00

(54) **Transparent paper for packaging tobacco**

(30) Priority: 24.04.2006 BR PI0601681
(71) Applicant: Marinho de Castro Netto, Henrique, 03560-000 Sao Paulo (BR)
(72) Inventor: Marinho de Castro Netto, Henrique, 03560-000 Sao Paulo (BR)
(74) Representative: Fernandez Lerroux, Aurelio

(57) **Abstract**

'TRANSPARENT PAPER, FOR TOBACCO PACKAGING SYSTEM', is an invention which offers tobacco, after having been packed, an atmosphere in which it is free from aggression as a consequence of humidity or excessive heat, and then allows the consumer to have its full visualization, by means of a paper made of cellulose pulp, 100% natural, biodegradable, odorless and colorless, cut into straps, forming a transparent packing which will create a favorable environment to keep the qualities of the tobacco, either pure or in bulk, after it has been packed.

## Description

### Field of the Invention

This description is related to the application for a patent for an innovative system solely used for tobacco packaging in bulk, which is packed in a paper especially developed for this project. Said paper is 100% natural. It is not only odorless, but also easily biodegradable after its disposal and in this way it contributes to environmental preservation.

The transparent paper, after being used in packaging, keeps tobacco in such an atmosphere that can be visualized perfectly and it is kept free form pollution caused by bacteria that provoke humidity and may cause fungus. Then, the transparent paper keeps tobacco's properties and characteristics related to flavor and humidity.

### Prior Art

Specialists know that tobacco is cultivated in big plantations, and it is the main non-nutritional plant grown in all the continents and responsible for generating profits and giving thousands of jobs.

The first cigar factories were small, real craftsmanship, manufactured by five workers at most. However, as consumption increased worldwide, industrialization and expansion took place together with an improvement in the quality of the product.

Therefore, tobacco-packaging systems are very important issues and today these systems carried out with resinous and polymeric materials that make up plastic bags, advertising receptors, for the distribution and marketing in specialized stores.

Keeping the natural properties of tobacco, whether it will be used pure or in bulk, is one of the problems that have to be faced due to this kind of conditioning. As said packaging is made of plastic, it may create atmospheres where tobacco venting is involved, and it may create conditions to increase humidity, hence having more humidity and fungus, apart from other problems which may change the flavor and aroma of the product.

Besides, that kind of packaging is not completely transparent, which may prevent consumers from buying, since visualization of tobacco by the consumer in order to analyze its color, appearance and texture is one of the favorable and reliable conditions. Of course, there is paper-based packaging such as Smoking Paper, Colony, Trevo, Puré Hemp among others; some of them are made of rice fiber, but do not offer the necessary transparency and characteristics of the environment itself and the conservation of the properties of the packed product.

### Description

The objectives related to the paper and packaging system are the objectives of the application for this patent. Said paper and packaging system offer tobacco, after having been packed, an atmosphere in which it is free from aggression as a consequence of humidity or excessive heat, and then allows the consumer to have its full visualization.

Therefore, the paper is made of cellulose pulp; it is 100% natural, biodegradable, odorless and colorless, making a completely transparent packaging which will create a favorable environment to keep the qualities of the tobacco, either pure or in bulk, after it has been packed.

After a superficial explanation, the paper and the system are detailed below, by means of the drawings attached hereto, where we can see:
Fig.1: a sketch of the packaging system, in which the special paper, by means of reel traction, goes through guillotine paper cutting which works with cold laminated films and produces equal straps with the appropriate measures for each quantity of product to be packed, whether it is a cigar or tobacco in bulk.
Fig. 2: view in perspective of a cigar, packed with the natural transparent paper.
Fig. 3: view in perspective of a quantity of tobacco in bulk, packed with natural transparent paper.

In accordance with the drawings, the 'TRANSPARENT PAPER FOR TOBACCO PACKAGING SYSTEM', object of this application for patent, is made of trees under reforestation which go through a pulverizing process without chemical products that ends up by obtaining cellulose pulp to manufacture 100% natural, biodegradable and odorless paper (1).

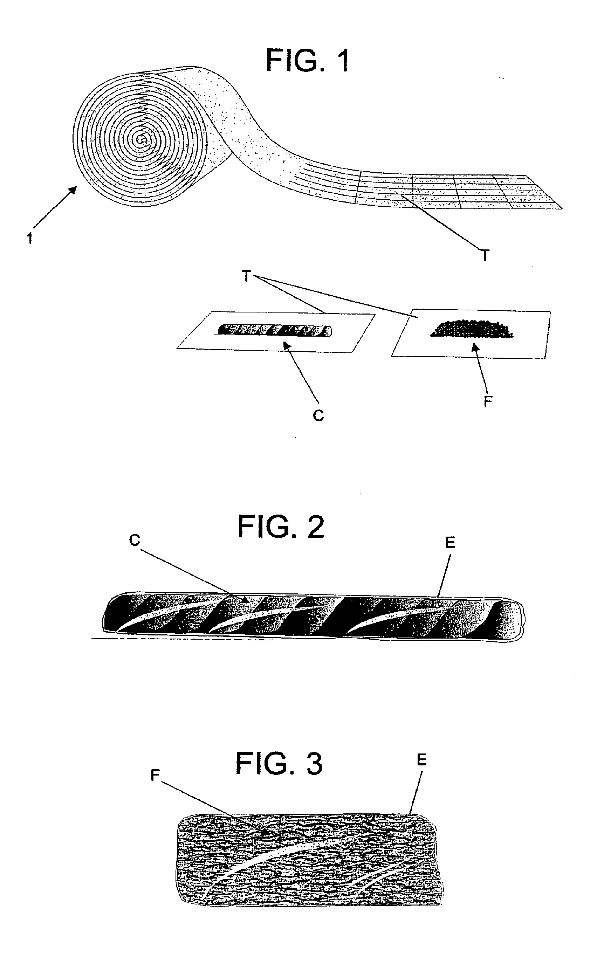

Apart from being biodegradable and odorless, characteristics that were mentioned above, the paper (1) is transparent and it is stored in reels where it goes through cold cutting through laminated films to make previously measured straps (T) to pack cigars (C) and tobacco (F) in bulk, in a predetermined quantity, as shown in Fig. 1.

After having been packed by the straps (T), the products (C) and (F) (as shown in Pictures 2 and 3) can be seen perfectly thanks to the paper transparency (1), which mainly protect the natural color and flavor properties kept in an environment free from humidity and excessive heat, thanks to the porosity and the natural characteristics of the paper (1).

## Claims

1. 'TRANSPARENT PAPER, FOR TOBACCO PACKAGING SYSTEM', made of trees under reforestation which go through a pulverizing process without chemical products that ends up by obtaining cellulose pulp to manufacture 100% natural, biodegradable and odorless paper (1). This product is stored in reels where it is cut into straps (T), by means of laminated films, to pack cigars (C) and also tobacco in bulk (F) in a predetermined quantity. Its distinctive characteristic allows in the packing (E) the full visualization of the products (C) and (F), guaranteeing its flavor and odor. These properties are kept in an atmosphere free from humidity and excessive heat, which is possible thanks to the porosity and natural characteristics of the paper (1).
